# EUROPEAN PATENT APPLICATION

(11) **EP 1 496 509 A2**
(43) Date of publication of application: **12.01.2005**
(21) Application number: 04016277.8
(22) Date of filing: 09.07.2004
(51) Int. Cl.: G11B 7/24, G11B 7/26

(54) **Optical recording medium and production thereof**

(30) Priority: 10.07.2003 JP 2003195402; 15.03.2004 JP 2004073320
(71) Applicant: Ricoh Company Ltd., Tokyo 143-8555 (JP)
(72) Inventor: Yashiro, Tohru, Tokyo 143-8555 (JP); Mikami, Tatsuo, Tokyo 143-8555 (JP); Nakamura, Yuki, Tokyo 143-8555 (JP)
(74) Representative: Barz, Peter, Dr.

(57) **Abstract**

An optical recording medium includes a first information substrate selected from one including a first substrate (1) and a read-only first recording layer (3) containing a reflective film and having information pits, and one including a first substrate with guide grooves, a first recording layer containing an organic dye, and a first reflective layer arranged in this order; and a second information substrate including a second substrate (2) with guide grooves, a second reflective layer (8), a second recording layer (7) containing an organic dye, and an inorganic protective layer (6) in this order. The first and second information substrates are bonded with the interposition of an optically transparent organic interlayer (5) so that the first and second substrates each face outward, and information recorded on the first and second recording layers is reproduced by applying light from a surface of the first substrate.

## Description

### BACKGROUND OF THE INVENTION

### Field of the Invention

The present invention relates to one-sided optical recording media having two recording layers in which information can be recorded and reproduced from one side thereof, and to production methods thereof.

### Description of the Related Art

In addition to read-only optical recording media such as digital versatile disks (DVDs), recordable DVD media such as DVD+RW, DVD+R, DVD-R, DVD-RW and DVD-RAM media have become commercially practical. These DVD+R and DVD+RW media are based on technologies as an extension of technologies on conventional recordable compact disks such as CD-R and CD-RW media. The recording density (track pitch and signal mark length) and the thickness of substrate are changed from those matching with CD specifications to those matching with DVD specifications, so as to ensure compatibility in reproduction with read-only DVD media. For example, DVD+R media are produced by applying a film of dye to a substrate by spin coating to form an optical recording layer, forming a metal reflective layer on the back side thereof to constitute an information recording substrate, and bonding the information recording substrate with another substrate having the same dimensions with the interposition of an adhesive material, as in CD-R media. The optical recording layer in this case comprises a dye material. One of the feature of the CD-R media is that they have a high reflectance of 65% to satisfy the specifications in CD systems. To yield a high reflectance in the above-mentioned configuration, the optical recording layer (optical absorption layer) must have a specific complex index of refraction at a wavelength of a light beam for the recording and reproduction of information. The dye materials have optical absorption properties satisfying these requirements. This is also true for the DVD media.

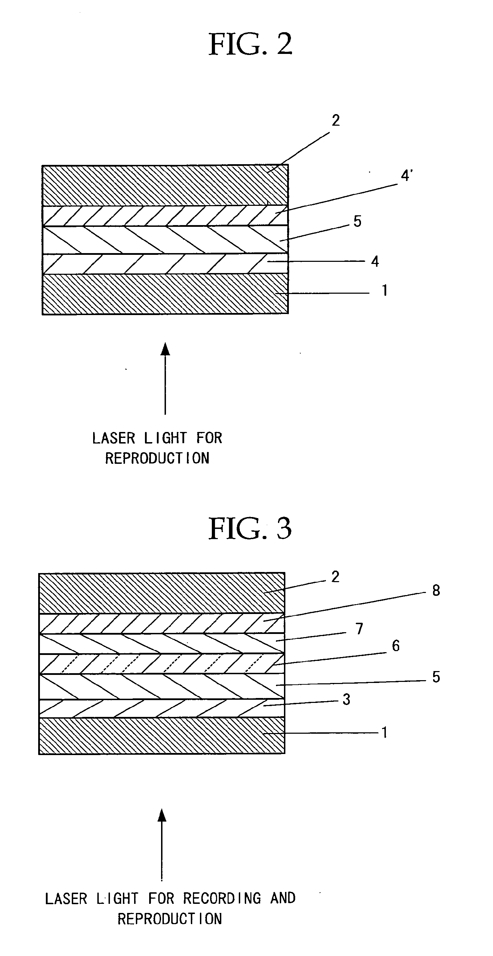

Certain read-only DVD media have two recording layers for increasing storage capacities. FIG. 2 is a schematic sectional view of a DVD media having two recording layers. A first substrate 1 and a second substrate 2 are bonded with the interposition of an optically transparent organic interlayer 5 made from an ultraviolet-curable resin. The medium has a first recording layer 4 on an internal surface of the first substrate 1, and a second recording layer 4' on an internal surface of the second substrate 2. The first recording layer 4 is a translucent dielectric film. The second recording layer 4' is a reflective film made typically of a metal. The recording layers carry concave and convex portions as recording marks, and recording signals are read therefrom as a result of the reflection and interference of a light beam for the reproduction of information. As signals are read from the two recording layers, the medium has a storage capacity of up to about 8.5 GB.

The first and second substrates each have a thickness of about 0.6 mm, and the optically transparent organic interlayer 5 has a thickness of about 50 µm. The translucent film constituting the first recording layer is so configured as to have a reflectance of about 30%. Thus, a laser beam for the reproduction of information on the second recording layer is reflected to be attenuated by about 30% of the total quantity of light in the first recording layer, is reflected by the reflective film of the second recording layer, further is attenuated in the first recording layer and comes out from the medium. The laser beam for the reproduction of information is focussed onto the first recording layer or the second recording layer, and the reflected light is detected to thereby reproduce signals on the respective recording layers. The information in DVD media is generally recorded and reproduced using a laser beam at a wavelength of about 650 nm.

The above-mentioned recordable DVD, DVD+R, DVD-R and DVD+RW media each have one recording layer where information can be read from one side thereof. To yield higher storage capacities in these optical recording media, they must be double-sided media where information can be read from both sides thereof. Two-layered optical recording medium where information can be recorded and reproducecd from one side thereof has two recording layers, therefore, when the signals are recorded by adjusting the focus of a writing laser beam onto the farther recording layer from the optical pickup and projecting the writing laser beam thereon, the first recording layer attenuate the laser beam, which causes the problem that the second recording layer cannot sufficiently absorb and reflect the laser beam to record the signals thereon.

Japanese Patent Application Laid-Open (JP-A) No. 11-66622 proposes an optical recording medium having two recording layers each comprising an organic dye, in which information can be recorded and reproduced on the two recording layers from one side of the optical recording medium. This optical recording medium comprises two substrates, one of which is so configured that a laser beam is applied from the substrate side thereof, and the other is so configured that a laser beam is applied from the recording layer side thereof. However, this configuration does not still solve the problem in that the second recording layer does not sufficiently absorb and reflect the light.

Japanese Patent(JP-B) No. 2796288 proposes an optical recording medium having a multilayer structure and comprising two recording layers composed of a dye arranged with the interposition of an interlayer. However, this optical recording medium cannot employ a configuration with high reflection utilizing multiple interactions between the reflection layer and the dye (recording layer), in contrast to CD-R and DVD+R media. In addition, this configuration aims to record information using laser beams at multiple wavelengths and is not ready for recording information on two recording layers using a laser beam at a single wavelength at a higher storage capacity.

### SUMMARY OF THE INVENTION

It is an object of the present invention to provide the optical recording medium where information can be recorded and reproduced from one side, in which the above mentioned conventional technical problems are solved and the second recording layer exhibits satisfactory recording signal properties. Another object of the present invention is to provide a method for producing the optical recording medium.

Specifically, the present invention provides, in a first aspect, an optical recording medium including:
a first information substrate selected from:
   one including a first substrate and at least a read-only first recording layer, the first recording layer including a reflective film and having information pits, and
   one including a first substrate with guide grooves, a first recording layer containing an organic dye, and a first reflective layer arranged in this order; and
a second information substrate including a second substrate with guide grooves, at least a second reflective layer, a second recording layer containing an organic dye, and an inorganic protective layer arranged in this order,
wherein the first information substrate and the second information substrate are bonded with the interposition of an optically transparent organic interlayer so that the first substrate and the second substrate each face outward, and
wherein the optical recording medium is so configured that information recorded on the first and second recording layers is reproduced by applying light to the optical recording medium from a surface of the first substrate.

The inorganic protective layer has a thickness of preferably 80 to 180nm, and more preferably 90 to 180nm.

The inorganic protective layer preferably mainly includes ZnS.

The inorganic protective layer may include at least one selected from ZnS, ZnS-SiO₂ and ZnS-SiC.

The guide grooves of the second substrate preferably have a depth of 20 to 60nm.

The optical recording medium may further includes a second organic interlayer between the second reflective layer and the second substrate.

The optical recording medium may be so configured that recording marks are formed in the second recording layer in a position near to the inorganic protective layer as a result of the change in properties of the dye and/or the vaporization of the dye.

The second recording layer preferably exhibits a maximum absorption or peak absorption at a wavelength of 580 to 620 nm.

The second recording layer preferably has a thickness of 60 to 100nm in a position corresponding to the guide groove.

It is preferred that the second recording layer has a thickness T1 in a position corresponding to the guide groove and a thickness T2 in a position corresponding to a land, and the ratio of T1 to T2, T1/T2, is from 0.8 to 1.0.

The present invention provides, in a second aspect, a method for producing the optical recording medium, including the step of forming a film of the second recording layer by coating, wherein the second reflective layer includes a silver alloy.

Further objects, features and advantages of the present invention will become apparent from the following description of the preferred embodiments with reference to the attached drawings.

### BREIF DESCRIPTION OF THE DRAWINGS

FIG. 1 is a graph showing an example of an absorption spectrum of a recording layer comprising an organic dye.
FIG. 2 is a schematic sectional view of a DVD medium having two recording layers.
FIG. 3 is a schematic sectional view of an example of an optical recording medium according to the present invention, which has a read-only first recording layer and a read/write second recording layer.
FIG. 4 is a schematic sectional view of an example of an optical recording medium according to the present invention, which has read/write first and second recording layers.
FIG. 5 illustrates an example of a layer configuration of the first recording layer of the optical recording medium according to the present invention.
FIG. 6 illustrates an example of a layer configuration of the second recording layer of the optical recording medium.
FIG. 7 is a graph showing a relationship between the thickness of an inorganic protective layer and the degree of modulation (I14/I14H) in a DVD medium according to Example 2.
FIG. 8 illustrates an absorption spectrum of the first recording layer of an optical recording medium according to Example 5.
FIG. 9 illustrates absorption spectra C and D of the second recording layers of the optical recording media according to Example 5 and Example 6, respectively.
FIG. 10 is a transmission electron micrograph (TEM) of a cross section of the optical recording medium according to Example 5.
FIG. 11 shows properties of an optical recording medium according to Example 7.
FIG. 12 shows properties of an optical recording medium according to Example 8.

### DESCRIPTION OF THE PREFERRED EMBODIMENTS

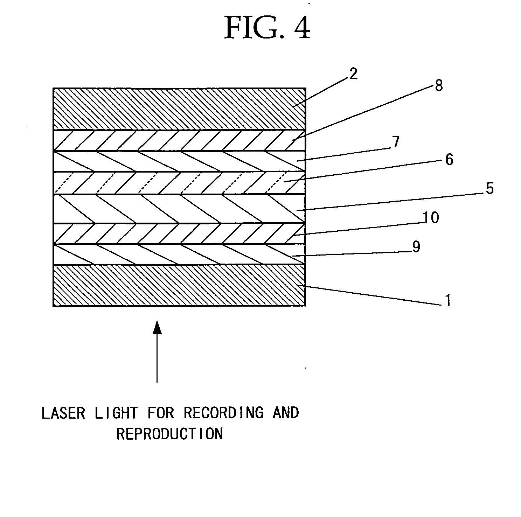

FIGS. 3 and 4 show examples of the configuration of the optical recording media of the present invention.

In the optical recording medium of FIG. 3, the first recording layer is a read-only layer, and the second recording layer is a read/write layer. In the optical recording medium of FIG. 4, both the first and second recording layers are read/write layers. The optical recording medium of FIG. 3 comprises a first information substrate 100 and a second information substrate 200. The first information substrate 100 includes a first substrate 1 and a read-only first recording layer 3 comprising a reflective film and having information pits. The second information substrate 200 includes a second substrate 2 with guide grooves, and at least a second reflective layer 8, a second recording layer 7 containing an organic dye, and an inorganic protective layer 6 arranged in this order. The first and second information substrates 100 and 200 are bonded with the interposition of an optically transparent organic interlayer 5 so that the first substrate 1 and the second substrate 2 each face outward. A laser beam L for the reproduction of information is applied to the optical recording medium from a surface of the first substrate. The optical recording medium of FIG. 4 comprises a first information substrate 100 and a second information substrate 200. The first information substrate 100 includes a first substrate 1 with guide grooves, a first recording layer 9 containing an organic dye, and a first reflective layer 10 arranged in this order. In this case, the first recording layer is recordable such as a write-once-read ―many optical recording medium. The second information substrate 200 includes a second substrate 2 with guide grooves, at least a second reflective layer 8, a second recording layer 7 containing an organic dye, and an inorganic protective layer 6 in this layer. The first and second information substrates 100 and 200 are bonded with the interposition of an optically transparent organic interlayer 5 so that the first substrate 1 and the second substrate 2 each face outward. A laser beam L for the reproduction of information is applied to the optical recording medium from a surface of the first substrate.

The optical recording medium of the present invention having the above configuration ensures good reflectance of signals from the second recording layer containing an organic dye. More specifically, the optical recording medium of the present invention is configured so that the damage of the second recording layer due to contact with the optically transparent organic interlayer is reduced by the inorganic protective layer, and the laser beam can be reflected at a higher reflectance from the second recording layer due to multiple interactions at both the interfaces of the second recording layer.

When a laser beam for the recording or reproduction, which is attenuated at the first recording layer and first reflective layer, is applied to the second recording layer to form recording marks in the second recording layer, the laser beam attenuates by the amount of absorption by the first recording layer, as compared with a DVD-ROM medium having a two recording layer. This attenuation raises the problem that the second recording layer are hard to have a recording sensitivity enough to record, and crosstalk between adjacent tracks are easy to increase crosstalk due to broadening of recording marks. Further, the second substrate is required to have guide grooves having a depth less than that of the guide grooves of the first substrate. And it leads to broadening of recording marks because the groove is not likely to have enough depth to prevent broadening of recording marks.

According to the present invention, recording marks are formed without thermal deformation so as to ensure a sufficient recording sensitivity in the second recording layer and to prevent broadening of the recording marks. To prevent thermal deformation, the inorganic protective layer which serves as a layer for preventing deformation is arranged adjacent to the second recording layer.

The inorganic protective layer also serves as a barrier layer which protects the second recording layer from the adverse effects of the optically transparent organic interlayer. Thus, an adhesive which may dissolve the dyes can be used as the optically transparent organic interlayer, and the two substrates can be easily bonded with each other.

In the optical recording medium of the present invention, recording marks can be formed in the second recording layer by the action of the change in properties of the dye and/or the evaporation of the dye without deformation of the interfaces between the adjacent layers. The recording marks are preferably formed in the second recording layer near to the inorganic protective layer. The phrase "the recording marks are formed in the second recording layer near to the inorganic protective layer" means that the formed recording marks are not in contact with the reflective layer and preferably that the centers of the recording marks are located upstream to the inorganic protective layer from the center of the recording layer in a thickness direction. This is because the recording marks are probably formed near to a layer which conducts heat less between the inorganic protective layer and the reflective layer, i.e., near to the inorganic protective layer. An increased accuracy of position of the recording marks enables the improvement of the jitter in signals.

If desired, the optical recording medium may be configured so that it has a single recording layer, in which the first information substrate comprises an optically transparent substrate alone.

The thickness of the inorganic protective layer is generally from about 10 to about 200nm, preferably 30nm or more for satisfactory inhibition of deformation, more preferably 80nm or more and further preferably 90nm or more for a sufficient degree of modulation (contrast) of recording signals. Further, it is preferably 180nm or less from the view of preventing an increased jitter and a reduced degree of modulation.

Examples of materials for the inorganic protective layer are inorganic substances having high light transmission properities such as SiO, SiO₂, MgF₂, SnO₂, ZnS, and ZnS-SiO₂, of which ZnS-SiO₂ is preferred for its lower crystallinity and higher refractive index.

The film mainly made of ZnS, more specifically the ratio of ZnS is 50 percent or more, is preferred. In addition to ZnS-SiO₂, preferable examples of the film mainly made of ZnS are ZnS-SiO₂, ZnS-SiC, ZnS-Si, and ZnS-Ge. The ratio of ZnS in the layer is preferably from about 60 to about 90 percent by mole for suitable crystallinity of the film.

The optical absorption of the second recording layer is preferably from 0.1 to 0.4 in terms of absorbance at the wavelength of a laser beam for the recording and reproduction of information as determined when a film of the dye alone is formed on the substrate. If the optical absorption is less than the above-preferred range, jitter is likely to increase. If the optical absorption is more than the above-preferred range absorption, reflectance decreases.

The thickness of the second recording layer (dye layer) is preferably from 60 to 100nm for satisfactorily low jitter. The ratio of the thickness T1 in a position corresponding to the guide groove to the thickness T2 in a position corresponding to a land of the second recording layer is preferably from 0.8 to 1.0.

In the two-layer DVD-ROM media, the specification on reflectance is from 18% to 30%. The first recording layer must exhibit reduced optical absorption to satisfy the specification and to ensure high optical absorption in the second recording layer. The absorbance herein can be measured with a regular ultraviolet spectrometer.

The optical absorption of the second recording layer can be controlled by adjusting the thickness thereof or optical absorption properties of the dye and is preferably controlled by adjusting the optical absorption properties of the dye. In this case, the dye film preferably has a maximum absorption wavelength or absorption peak at a wavelength ranging from 580 to 620 nm. If a maximum absorption wavelength or absorption peak at a wavelength is less than the above-preferred range, the dye film is not likely to have sufficient recording sensitivity. If a maximum absorption wavelength or absorption peak at a wavelength is more than the above-preferred range, the dye film is not likely to have sufficient reflectance.

Also, the dye preferably has a thermal decomposition temperature ranging from 250°C to 350°C. If a thermal decomposition temperature is more than the above-preferred range, recording sensitivity decreases. If a thermal decomposition temperature is less than the above-preferred range, thermal stability decrease and recording marks are likely to broaden. The thermal decomposition temperature of the dye can be easily determined with a versatile thermobalance.

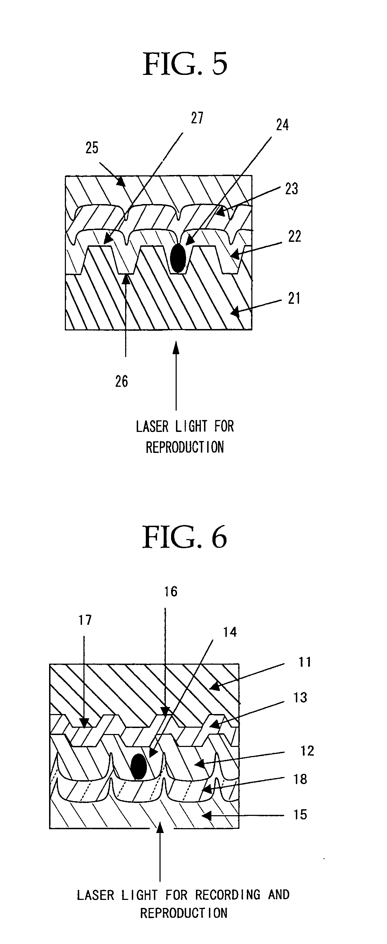

FIGS. 5 and 6 schematically illustrate examples of layer configurations of the first and second recording layers, respectively, of the optical recording media. A recording mark 24 is formed in the first recording layer 22 in a position corresponding to a groove 26 of the first substrate 21. A recording mark 14 is formed in the second recording layer 12 in a position corresponding to a land 17 of the second substrate 11. Such recording marks should preferably be formed in the second recording layer 12 without thermal deformation, for inhibiting broadening of the recording marks to thereby reduce crosstalk and ensure satisfactorily low jitter. In other words, the recording marks should preferably be formed as a result of the change in properties of the dye and/or the vaporization of the dye. Such recording marks can be formed by the above layer configuration. FIG. 5 illustrates the first substrate 21, a first reflective layer 23, an optically transparent interlayer 25, and a land 27 of the first substrate. FIG. 6 illustrates the second substrate 11, a second reflective layer 13, an optically transparent interlayer 15, a groove 16 of the second substrate, and an inorganic protective layer 18.

As illustrated in FIGS. 5 and 6, shapes of the grooves in the first and second substrates are different.

In DVD+R and DVD-R media of 4.7 GB at a pitch of 0.74 µm, the grooves of the first substrate preferably have a depth of 150 to 200nm and a bottom width of 0.1 to 0.35 µm for satisfactorily utilizing interfacial reflection. As shown in FIG. 5, the grooves are often filled with the dye when the dye film is formed by spin coating. Thus, the dimensions of the interface between the first recording layer (dye layer) and the first reflective layer are determined by the amount of the dye in the grooves and the dimensions of the grooves. The above-mentioned dimensions of the grooves are suitable for better interfacial reflection.

The guide grooves of the second substrate preferably have a depth of 20 to 60nm for reducing attenuation of the reflected light due to the guide grooves and for ensuring high reflection from the second recording layer. As shown in FIG. 6, the dimensions of the interface between the second recording layer (dye layer) and the second reflective layer are determined by the dimensions of the grooves of the second substrate. For satisfactorily utilizing interfacial reflection of the light, the depth of the grooves is preferably within the above range. At the wavelength of a light beam for the recording and reproduction of information in DVD media (about 650 nm), the guide grooves preferably have a width (bottom width) of 0.1 to 0.35 µm. Grooves with a depth exceeding 60nm and/or a bottom width exceeding 0.35 µm may often invite a decreased reflectance. Grooves with a depth less than 20nm and/or a bottom width less than 0.1 µm may invite recording marks having a varying shape, thus inviting increased jitter. The depth of the guide grooves can also be controlled by forming a second organic interlayer between the second reflective layer and the second substrate.

Substrates generally used in DVD+R media have guide grooves with a depth of about 150 to about 200nm. By applying an organic material to the substrate by spin coating, the resulting second organic interlayer has grooves with a depth of 100nm or less on its surface. A dye can be used as the organic material as in the recording layers.

Dye-containing recording layers are generally formed by applying a coating solution comprising a dye and a solvent to a substrate with guide grooves by spin coating. However, the second recording layer is formed on a metal reflective layer (the second reflective layer), and the material of the metal reflective layer must thereby have good wettability with the dye. If the reflective layer is formed from pure silver (Ag) for the purpose of higher reflectance and lower cost and the second recording layer is formed thereon, the formed second recording layer (dye layer) may often have some defects due to insufficient coating.

Therefore, the second reflective layer preferably comprises a silver alloy, of which a silver alloy mainly comprising Ag and a trace amount of Nd, Cu Pd, and/or In is more preferred. The amount of the additional metal element(s) is preferably from about 0.2 to about 2 atomic percentage.

Materials for the optical recording media of the present invention will be illustrated below.

The optical recording medium ensure its high reflectance based on multiple interactions at both the interfaces of the dye-containing recording layers, as in DVD+R and CD-R media. The recording layers each comprising an organic dye should preferably have a high refractive index n of preferably more than 2 and a relatively low extinction coefficient k of preferably more than 0.03 and less than 0.2. Such optical properties can be obtained by setting the wavelength of a light beam for the recording and reproduction of information at a longer-wavelength edge of the optical absorption of the dye film.

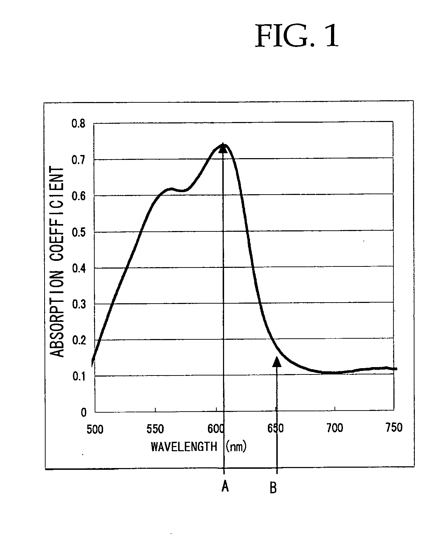

FIG. 1 shows an example of an optical absorption spectrum of a recording layer comprising an organic dye. The recording layer exhibits a maximum absorption at a wavelength of A. The information in DVD media is generally recorded and reproduced using a laser beam at a wavelength of about 650 nm (B).

Suitable materials for the first and second recording layers are cyanine dyes, phthalocyanine dyes, pyrylium/thiopyrylium dyes, azulenium dyes, squarylium dyes, azo dyes, formazan chelate dyes, dyes of complex salts of metal such as Ni or Cr, naphthoquinone/anthraquinone dyes, indophenol dyes, indoaniline dyes, triphenylmethane dyes, triallylmethane dyes, aminium/diiminium dyes and nitroso compounds. Where necessary, the recording layers may further comprise additional components, for example, a binder such as low molecular weight polymers, and a stabilizer such as antioxidants. Examples of low molecular weight polymers are polyvinyl alcohols and polyvinyl acetals. Examples of antioxidants are radical capturing agent.

Among the above-mentioned dyes, at least one of tetraazaporphyrazine dyes, cyanine dyes, azo dyes and squarylium dyes is preferably used. These dyes can easily yield a dye film (dye layer) by applying a solution thereof, and the resulting dye film exhibits a maximum absorption at a wavelength of 550 to 650 nm and thus exhibits desired and satisfactorily controlled optical properties at the wavelength of laser light for recording and reproduction (about 650 nm).

The thickness of the organic dye-containing recording layers is preferably from 10 to 500nm, and, in particular, preferably from 50 to 200nm. Otherwise, the recording sensitivity may decrease or the reflectance may decrease.

The materials for the substrate can be selected from any of the various materials which are used for the substrate of the conventional optical recording media. Examples of the materials for the substrates are acrylic resins such as poly(methyl methacrylate)s; vinyl chloride resins such as poly(vinyl chloride)s and vinyl chloride copolymers; epoxy resins; polycarbonate resins; amorphous polyolefins; polyesters; glass such as soda-lime glass; and ceramics. Among them, poly(methyl methacrylate)s, polycarbonate resins, epoxy resins, amorphous polyolefins, polyesters and glass are preferred for satisfactory dimensional stability, optical transparency and flatness, of which polycarbonates are more preferred for their good moldability.

The materials for the reflective layers are preferably substances having a high reflectance with respect to the laser light. Examples of such substances are metals and semimetals such as Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ca, In, Si, Ge, Te, Pb, Po, Sn, Si, and Nd. Among them, Au, Al and Ag are preferred for their high reflectance. Each of these substances can be used singly, or can be used as a mixture of two or more or an alloy.

The thickness of the reflective layers is generally from 5 to 300nm. The thickness of the first reflective layer should be set so that the optical transmittance of the layer is 40 percent or more when the first recording layer is a read-only reflective layer or when the first reflective layer is arranged on the first recording layer comprising an organic dye for recording. In these cases, the thickness is preferably from 5 to 30nm for satisfactory optical transmittance. As the thickness of the film increase, the optical transmittance tend to The second reflective layer preferably has a thickness of 100 to 300nm and preferably comprises a silver alloy (Ag alloy), as mentioned above.

A protective layer made of, for example, an ultraviolet curable resin may be arranged adjacent to these reflective layers for chemically and physically protecting these layers.

The inorganic protective layer is arranged between the second recording layer and the optically transparent organic interlayer for the purpose of forming recording marks without thermal deformation and chemically and physically protecting the second recording layer (dye layer).

Suitable materials for the inorganic protective layer are inorganic substances having high light transmission properities such as SiO, SiO₂, MgF₂, SnO₂, ZnS, ZnS-SiO₂, and ZnS-SiC, of which a material mainly comprising ZnS, such as ZnS-SiO₂ or ZnS-SiC, is typically preferred for low crystallinity and high refractive index.

The optically transparent organic interlayer is preferably used as an adhesive layer. Suitable examples of materials are acrylate, epoxy or urethane ultraviolet curable or thermosetting adhesives.

The production of the optical recording medium will be illustrated below.

Initially, a first information substrate comprising a first substrate and a first recording layer is produced in the same way as in conventional DVD+R and DVD-ROM media.

Specifically, the first information recording substrate is produced by the following processes (a) and (b) as in DVD+R media.

Process (a) for applying a film of the first recording layer to the first substrate having grooves and/or pits on a surface thereof by coating.

Process (b) for forming a first reflective layer on the first recording layer by a vacuum film-formation process.

Separately, a second information substrate comprising a second substrate and other layers is produced by the following processes (c), (d) and (e).

Process (c) for forming a second reflective layer on the second substrate having guide grooves and/or pits on a surface thereof by a vacuum film-forming procedure, such as vapor deposition, sputtering or ion plating, with or without the interposition of an interlayer.

Process (d) for forming a film of a second recording layer comprising an organic dye on the second reflective layer by coating.

More specifically, the organic dye is dissolved in a solvent to yield a coating solution, and the coating solution is applied to the substrate. Examples of the solvent are known organic solvents such as alcohols, Cellosolves, halogenated hydrocarbons, ketones and ethers.

The coating solution is preferably applied by spin coating. Thus, the thickness of the layer can be controlled by adjusting the concentration and viscosity of the coating solution, and drying temperature of the solvent.

Process (e) for forming an inorganic protective layer on the second recording layer by a vacuum film-formation procedure such as vapor deposition, sputtering or ion plating.

Next, the first and second information substrates are bonded with each other with the interposition of an adhesive layer (optically transparent organic interlayer). Specifically, an adhesive is added dropwise onto the inorganic protective layer of the second information substrate, the first information substrate is attached thereto, the adhesive is spread uniformly, and ultraviolet rays are applied to thereby cure the adhesive. The ultraviolet rays are preferably applied from the first substrate, because the first substrate is highly optically transparent.

The present invention provides optical recording medium, where a light beam for the recording and/or reproduction of information can be applied to the first and second recording layers from one side thereof.

Furthermore, by setting the thickness of the inorganic protective layer at 80 to 180nm and more preferably 90 to 180nm, the optical recording medium exhibit good properties in optical recording with low crosstalk and reduced jitter.

By arranging an inorganic protective layer mainly comprising ZnS adjacent to the second recording layer, the inorganic protective layer satisfactorily adheres to the second recording layer (dye layer) with reduced crystallinity and can thereby effectively serve as a barrier layer. The inorganic protective layer has a low optical absorption and exhibits a high refractive index and contributes to yield a high signal intensity (degree of modulation) by setting its thickness to be suitable for multiple interaction.

By setting the depth of guide grooves of the second substrate at 20 to 60nm or by arranging a second organic interlayer between the second reflective layer and the second substrate, recording signals with high reflection can be easily obtained from the second recording layer.

The reflective layer preferably comprises a silver alloy. Thus, the optical recording medium can be easily produced while avoiding defects in film formation by coating.

The present invention will be illustrated in further detail with reference to several examples and a comparative example below, which are not intended to limit the scope of the present invention.

### Example 1

A film of Ag was formed onto a second substrate by sputtering using Ar gas as a sputtering gas to thereby form a second reflective layer about 100nm thick thereon. The second substrate was made of a polycarbonate, had a diameter of 120 mm and a thickness of 0.6 mm and had guide grooves (concave and convex pattern) having a depth of about 30nm and a track pitch of 0.74 µm.

A squarylium dye compound represented by following Formula 1 was dissolved in 2,2,3,3-tetrafluoropropanol to form a coating solution. The coating solution was applied to the Ag reflective layer by spin coating to form a second recording layer about 80nm thick. The second recording layer exhibited a maximum absorption at a wavelength of 605 nm and an absorbance (Abs) at the maximum absorption wavelength of 1.81 in its optical absorption spectrum.

A film of ZnS-SiO₂ at a molar ratio of 8:2 was formed onto the second recording layer by sputtering using Ar gas as a sputtering gas, to form an inorganic protective layer about 120nm thick. Thus, a second information substrate was prepared.

Separately, DVD-ROM information pits were formed on surface of a first substrate made of a polycarbonate having a diameter of 120 mm and a thickness of 0.6 mm, and a film of Au was formed thereon to form a first reflective layer about 10nm thick, thus yielding a first information substrate.

The above-prepared first and second information substrates were bonded with an ultraviolet curable adhesive (KAYARAD DVD 003, available from Nippon Kayaku Co., Ltd.) to yield an optical recording medium having the layer configuration shown in FIG. 3. The Au reflective layer had a transmittance of about 70 percent.

Then, DVD eight-to-sixteen (8-16) signals were recorded on the optical recording medium at a wavelength of 657 nm, a numerical aperture (NA) of 0.65 and a linear velocity of 3.84 m/s and were then reproduced. As a result, the optical recording medium showed a reflectance (I14H) after recording of 20% and a degree of modulation (I14/I14H) of 85%. These properties were determined using an optical tester DDU 1000 available from Pulstec Industrial Co., Ltd.

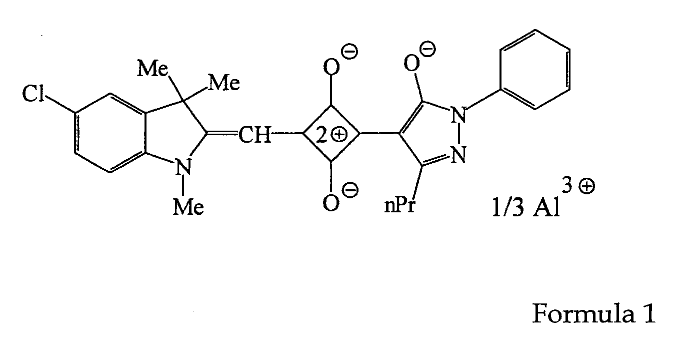

### Example 2

An optical recording medium was produced by the procedure of Example 1, except for varying the thickness of the inorganic protective layer composed of ZnS-SiO₂ within a range from 25 to 180nm.

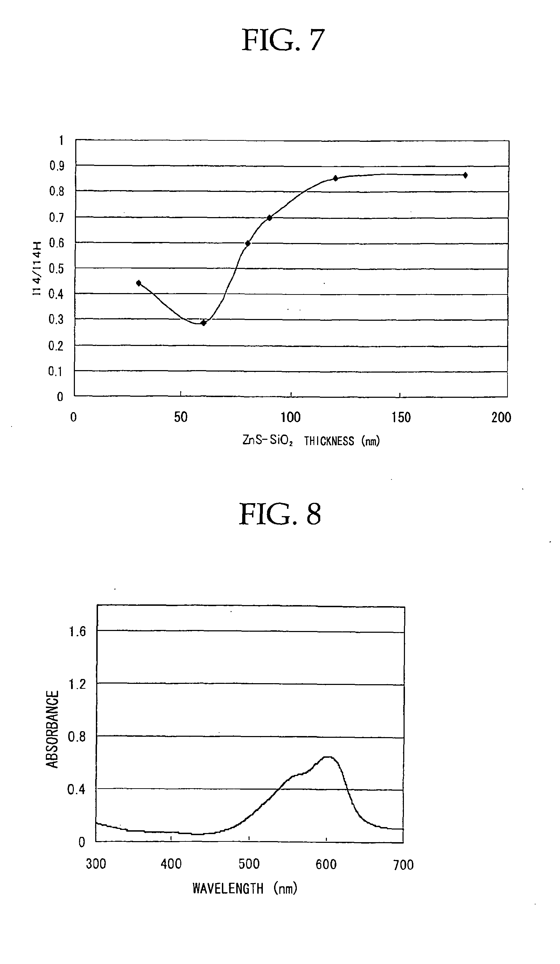

The properties of the optical recording medium was determined by the procedure of Example 1. As a result, the optical recording medium satisfied the DVD standard on degree of modulation (I14/I14H) of 0.6 or more at a thickness of the inorganic protective layer of 80 to 180nm (FIG. 7).

### Example 3

An optical recording medium was produced and its properties were determined by the procedure of Example 1, except for using a substrate having guide grooves with a depth of 60nm as the second substrate. The optical recording medium showed a reflectance of 18% after recording, which satisfies the DVD specifications on reflectance of 18% or more.

### Example 4

The squarylium dye compound represented by Formula 1 was dissolved in 2,2,3,3-tetrafluoropropanol to form a coating solution. The coating solution was applied to a first substrate by spin coating to form a first recording layer about 80nm thick.
The first substrate was made of a polycarbonate, had a diameter of 120 mm and a thickness of 0.58 mm and had guide grooves having a depth of about 140nm and a track pitch of 0.74 µm. Then, a film of Ag_{99.5}Cu_{0.05} was formed onto the first recording layer by sputtering using Ar gas as a sputtering gas to thereby yield a first reflective layer about 15nm thick. Thus, a first information substrate was prepared.

An optical recording medium having the layer configuration shown in FIG. 3 was produced by the procedure of Example 1, except for using the above-prepared first information substrate as the first information substrate.

The properties of the optical recording medium were determined by the procedure of Example 1 to find that the optical recording medium exhibited a reflectance (I14H) after recording of 18% and a degree of modulation (I14/I14H) of 85%.

### Example 5

Squarylium Dye Compounds A and B represented by following Formula 2 and a formazan chelate compound represented by following Formula 3 were dissolved in 2,2,3,3-tetrafluoropropanol in a ratio of 1:6:3 (Squarylium Dye Compound A: Squarylium Dye Compounds B: a formazan chelate compound) to form a coating solution. The coating solution was applied to a first substrate by spin coating to thereby form a first recording layer having 60nm thickness thereon. The first substrate was made of a polycarbonate, had a diameter of 120 mm and a thickness of 0.57 mm and had guide grooves having a depth of about 140nm, a width of about 0.25 µm and a track pitch of 0.74 µm.

The first recording layer exhibited a maximum absorption at a wavelength of 603 nm and an absorbance (Abs) at the maximum absorption wavelength of 0.65 in its absorption spectrum (FIG 8). Then, a film of an Ag_{98.4}Nd_{0.7}Cu_{0.9} alloy was formed on the first recording layer by sputtering using Ar gas as a sputtering gas to thereby form a first reflective layer about 15nm thick thereon.

Separately, a film of an Ag_{98.4}Nd_{0.7}Cu_{0.9} alloy was formed onto a second substrate by sputtering using Ar gas as a sputtering gas to thereby form a second reflective layer about 120nm thick thereon. The second substrate was made of a polycarbonate, had a diameter of 120 mm and a thickness of 0.57 mm and had guide grooves having a depth of about 28nm, a width of about 0.25 µm and a track pitch of 0.74 µm.

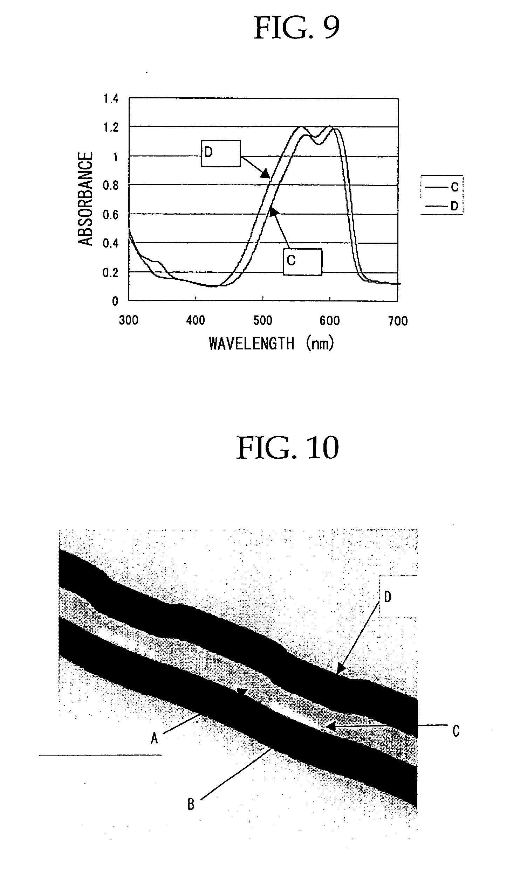

Next, a film of Squarylium Dye Compound C represented by following Formula 2 was applied to the second reflective layer by spin coating to thereby form a second recording layer 80nm thick thereon. A film of ZnS-SiO₂ at a molar ratio of 80:20 was formed onto the second recording layer by sputtering using Ar gas as a sputtering gas, to form an inorganic protective layer about 120nm thick. The second recording layer exhibited a maximum absorption at a wavelength of 607 nm and an absorbance (Abs) at the maximum absorption wavelength of 1.2 in its absorption spectrum (FIG 9; C).

The above-prepared first and second information substrates were bonded with an ultraviolet curable adhesive (KAYARAD DVD 003, available from Nippon Kayaku Co., Ltd.) to yield an optical recording medium according to the present invention.

Then, DVD eight-to-sixteen (8-16) signals were recorded on the optical recording medium at a wavelength of 658 nm, a numerical aperture (NA) of 0.65 and a linear velocity of 9.2 m/s and were then reproduced at a linear velocity of 3.84 m/s using an optical tester DDU 1000 available from Pulstec Industrial Co., Ltd. As a result, the optical recording medium satisfied the DVD-ROM specifications (Table 1). The recording strategy was according to a (n-2)T multipath system at a multipath width of 11/16.

**Table 1**

| Properties | DVD specifications | First recording layer | Second recording layer |
|---|---|---|---|
| Reflectance (I14H) after recording | 18% or more | 20% | 21% |
| Degree of modulation (I14/I14H) | 60% or more | 65% | 73% |
| Jitter | 8% or less | 7.2% | 7.8% |

The cross-section of the optical recording medium was observed by a transmission electron microscope (TEM) to find that a recording mark was formed in the second recording layer as a result of the change in properties of the dye and/or the vaporization of the dye without deformation at the layer interface (FIG. 10 A: second recording layer B: inorganic protective layer C: recording mark D: second reflective layer). The thickness of the dye layer (second recording layer) was 80nm in a guide groove and was 90nm in a land, showing that the ratio of the thickness in the groove to that in the land was 0.89.

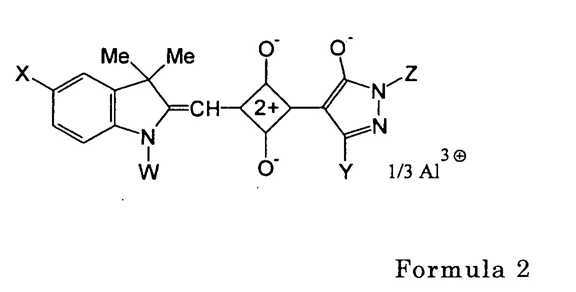

| Squarylium Dye Compound | | | | |
|---|---|---|---|---|
| Compound | W | X | Y | Z |
| A* | Me | Cl | nPr | Ph |
| B | nBu | Cl | CF₃ | Ph |
| C | Me | Benz | CF₃ | Ph |
| D | Me | OMe | CF₃ | Ph |

| | | | | |
|---|---|---|---|---|
| *: Compound A is the same as the compound of Formula 1. | | | | |

Me is methyl, Pr is propyl, and Ph is phenyl group.

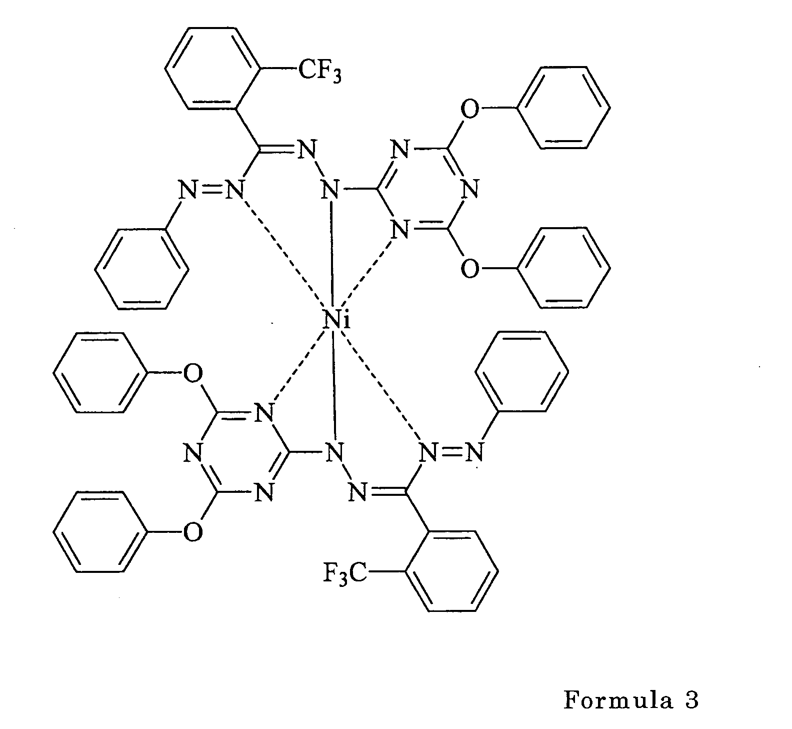

### Example 6

An optical recording medium according to the present invention was prepared by the procedure of Example 5, except for using Squarylium Dye Compound D represented by Formula 2 as the material for the second recording layer. The second recording layer exhibited a maximum absorption at a wavelength of 599 nm and an absorbance (Abs) at the maximum absorption wavelength of 1.21 in its absorption spectrum (FIG 9; D).

The properties of the optical recording medium were determined by the procedure of Example 5, to find that the medium had good properties as in Example 5 (Table 2).

The cross-section of the optical recording medium was observed by a transmission electron microscope (TEM) to find that a recording mark was formed in the second recording layer as a result of the change in properties of the dye and/or the vaporization of the dye without deformation at the layer interface as in Example 5.

**Table 2**

| Properties | DVD specifications | First recording layer | Second recording layer |
|---|---|---|---|
| Reflectance (I14H) after recording | 18% or more | 20% | 24% |
| Degree of modulation (I14/I14H) | 60% or more | 65% | 80% |
| Jitter | 8% or less | 7.2% | 7.7% |

### Example 7

An optical recording medium according to the present invention was prepared by the procedure of Example 5, except for using ZnS-SiO₂ (80:20), ZnS-SiC (80:20), ZnS, SiO₂, Al₂O₃, or lithium tin oxide (ITO) as the material for the inorganic protective layer and varying the thickness thereof in a range from 100 to 150nm.

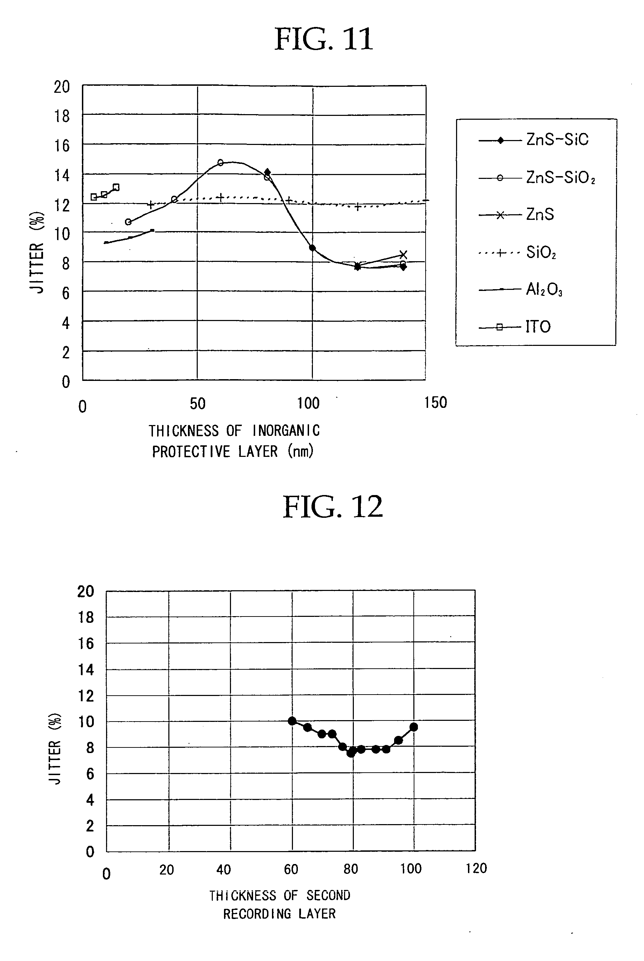

The properties of the optical recording medium were determined by the procedure of Example 5. As a result, the optical recording medium, wherein the inorganic protective layer mainly comprised ZnS, i.e., comprised ZnS-SiO₂, ZnS-SiC or ZnS and had a thickness of about 120nm, showed satisfactorily low jitter of 10% or less (FIG. 11).

### Example 8

An optical recording medium according to the present invention was prepared by the procedure of Example 5, except for varying the thickness of the second recording layer within the range of 60 to 100nm.

The properties of the optical recording medium were determined by the procedure of Example 5. As a result, the optical recording medium showed satisfactorily low jitter of 10% or less at a thickness of the second recording layer of 60 to 100nm (FIG. 12).

### Comparative Example 1

An optical recording medium was prepared by the procedure of Example 1, except that the inorganic protective layer was not formed. The properties of the optical recording medium were determined by the procedure of Example 1 to find that focus tracking could not be performed and that the recording layers were fused and damaged.

While the present invention has been described with reference to what are presently considered to be the preferred embodiments, it is to be understood that the invention is not limited to the disclosed embodiments. On the contrary, the invention is intended to cover various modifications and equivalent arrangements included within the spirit and scope of the appended claims. The scope of the following claims is to be accorded the broadest interpretation so as to encompass all such modifications and equivalent structures and functions.

## Claims

1. An optical recording medium comprising:
a first information substrate;
an optically transparent organic interlayer on the first information substrate; and
a second information substrate on the optically transparent organic interlayer, in which the optical recording medium is so configured that information recorded on at least one of a first recording layer and a second recording layer is reproduced by applying light to the optical recording medium from a surface of a first substrate,
wherein the first information substrate is selected from:
one comprising a first substrate and a read-only first recording layer, a first recording layer comprising a reflective film and having information pits, and
one comprising a first substrate with guide grooves, a first recording layer containing an organic dye, and a first reflective layer arranged in this order, and
wherein the second information substrate comprises a second substrate with guide grooves, at least a second reflective layer, a second recording layer containing an organic dye, and an inorganic protective layer arranged in this order, the inorganic protective layer having a thickness of 80 to 180nm.

2. An optical recording medium according to claim 1, wherein the inorganic protective layer mainly comprises ZnS.

3. An optical recording medium according to claim 2, wherein the inorganic protective layer comprises at least one selected from the group consisting of ZnS, ZnS-SiO₂ and ZnS-SiC.

4. An optical recording medium according to any one of claims 1 to 3, wherein the guide grooves of the second substrate have a depth of 20 to 60nm.

5. An optical recording medium according to any one of claims 1 to 4, further comprising a second organic interlayer between the second reflective layer and the second substrate.

6. An optical recording medium according to any one of claims 1 to 5, wherein inorganic protective layer conducts heat less compared to the second reflective layer.

7. An optical recording medium according to any one of claims 1 to 6, wherein the optical recording medium is so configured that recording marks are formed in the second recording layer in a position near to the inorganic protective layer as a result of at least one of the change in properties of the dye and the vaporization of the dye.

8. An optical recording medium according to claim 7, the recording marks in the second layer are formed in a state where the recording marks are not in contact with the reflective layer.

9. An optical recording medium according to any one of claims 1 to 8, wherein the second recording layer exhibits a maximum absorption or peak absorption at a wavelength of 580 to 620 nm.

10. An optical recording medium according to any one of claims 1 to 9, wherein the second recording layer has a thickness of 60 to 100nm in a position corresponding to the guide groove.

11. An optical recording medium according to any one of claims 1 to 10, wherein the second recording layer has a thickness T1 in a position corresponding to the guide groove and a thickness T2 in a position corresponding to a land, and wherein the ratio of T1 to T2, T1/ T2, is from 0.8 to 1.0.

12. An optical recording medium according to any one of claims 1 to 11, wherein the organic dye contained in the second recording layer is at least one selected from the group consisting of tetraazaporphyrazine dyes, cyanine dyes, azo dyes and squarylium dyes.

13. An optical recording medium according to any one of claims 1 to 12, wherein the first recording layer comprises the organic dye, and the organic dye is at least one selected from the group consisting of tetraazaporphyrazine dyes, cyanine dyes, azo dyes and squarylium dyes.

14. An optical recording medium according to any one of claims 1 to 13, wherein at at least one of the first reflective layer and the second reflective layer comprise at least one selected from the group consisting of Ag, Al and Au.

15. An optical recording medium according to claim 14, wherein the second reflective layer comprises a silver alloy.

16. A method for producing the optical recording medium of claim 1, comprising the step of forming a film of the second recording layer by coating, wherein the second reflective layer comprises a silver alloy.
